# DEMANDE DE BREVET EUROPEEN

(11) **EP 4 243 470 A1**
(43) Date de publication de la demande: **13.09.2023**
(21) Numéro de dépôt: 23160684.9
(22) Date de dépôt: 08.03.2023
(51) Int. Cl.: H04W 12/041, H04W 12/0431, H04W 12/61, H04W 12/76, H04W 76/50, H04W 4/90, H04W 4/10, H04L 65/4061

(54) **PROCÉDÉ DE GESTION D'IDENTITÉ PAR UNE ENTITÉ ÉMETTRICE DANS UN RÉSEAU 3GPP MCS**

(30) Priorité: 08.03.2022 FR 2201994
(71) Demandeur: Airbus DS SLC, 78990 Elancourt (FR)
(72) Inventeur: Granboulan, Louis, Elancourt (FR); Paterour, Olivier, Elancourt (FR); Piroard, François, Elancourt (FR)
(74) Mandataire: Cabinet Camus Lebkiri

(57) **Abrégé**

Un aspect de l'invention concerne un procédé mis en oeuvre par une entité cliente émettrice comprise dans un réseau selon le standard 3GPP MCS « 3rd Génération Partnership Program Mission Critical Services », l'entité cliente émettrice étant configurée pour émettre une pluralité de contenus destinés à au moins une entité cliente réceptrice comprise dans le réseau, l'entité cliente émettrice et l'entité cliente réceptrice étant affiliées à un même groupe de communication, le procédé comprenant au moins une étape de génération, par l'entité cliente émettrice, d'un identifiant de clé utilisateur de groupe (GUK-ID), l'identifiant de clé utilisateur de groupe (GUK-ID) étant spécifique au groupe de communication et étant utilisé pour chiffrer le contenu, l'étape de génération étant répétée à chaque fois qu'un événement prédéterminé a lieu.

## Description

### DOMAINE TECHNIQUE DE L'INVENTION

Le domaine technique de l'invention est celui des télécommunications.

La présente invention concerne un procédé de gestion d'identité par une entité émettrice dans un réseau 3GPP MCS, et en particulier permettant de résoudre des problèmes de sécurité non résolus par le standard.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

Le chiffrement de média voix MCPTT (de l'anglais « Mission Critical Push To Talk » pour « Appuyer Pour Parler en Mission Critique » en français) ou vidéo MCVideo dans une communication de groupe est défini dans la spécification technique TS 33.180. Elle met notamment en oeuvre la diversité du point d'extrémité (« endpoint diversity » en anglais).

On appellera par la suite « MCX » tout service Mission-Critique défini par le standard 3GPP MCS, tels que les services MCVideo, MCData (pour « Données » en français) et MCPTT. Un « client » et un serveur sont des dispositifs comprenant au moins un processeur et une mémoire, la mémoire comprenant des instructions qui, lorsqu'elles sont exécutées par le processeur, conduisent le dispositif utilisateur à mettre en oeuvre au moins les actions qui lui sont attribuées. Préférentiellement, un client est un dispositif utilisateur. De la même façon, un « serveur » peut être un dispositif utilisateur. Un « client MCX » et un « serveur MCX » sont donc des dispositifs utilisateur configurés pour mettre en oeuvre des services Mission Critique.

Lors d'une émission de media depuis un client MCX, le media émis peut être chiffré d'une façon ne dépendant pas de l'émetteur. Dans un tel cas, le concept de « diversité d'extrémité » ou « endpoint diversity » en anglais, n'est pas mis en oeuvre. Au contraire, la mise en oeuvre de la diversité d'extrémité impose le chiffrement du media émis par une clé propre au client MCX émetteur. Pour cela, l'identité MCX ID de l'utilisateur de ce client MCX émetteur est utilisée pour générer un identifiant de clé utilisateur de groupe (GUK-ID pour « Group User Key Identifier » en anglais). Cet identifiant GUK-ID est utilisé pour :
- chiffrer un media du flux SRTP (de l'anglais « Secure Real-time Protocol » pour « Protocole Temps Réel Sécurisé » en français) émis par le client MCX émetteur et
- déchiffrer ce flux media SRTP par les clients MCX récepteurs.

Les procédures de la spécification technique TS 33.180 (clause 7.4.2) prévoient que le client MCX émetteur inclue cet identifiant GUK-ID dans un champ SRTP MKI (de l'anglais « Master Key Identifier » pour « Identifiant de Clé Maitre » en français) de 64 bits transmis avec chaque paquet SRTP. L'identifiant de clé maitre MKI au format long (64 bits) comprend en fait un identifiant de clé maitre de groupe (GMK-ID pour « Group Master Key Identifier » en anglais) concaténé à l'identifiant de clé utilisateur de groupe GUK-ID. Pour créer l'association de sécurité du groupe de communication au sein duquel le media est échangé, une clé maitre de groupe (GMK) et son identifiant associé (GMK-ID) sont distribués aux clients MCX du groupe par un serveur de gestion de groupe (« GMS » pour « Group Management Server » en anglais).

Cette procédure donne aussi la possibilité, lorsque l'identité de l'utilisateur du client MCX émetteur (identité aussi appelée « User Salt » en anglais) est connue des clients MCX récepteurs, de réduire le SRTP MKI à 32 bits en omettant sa composante GUK-ID de l'émetteur, c'est-à-dire en ne comprenant que l'identifiant de clé maître de groupe GMK-ID. L'identifiant de clé utilisateur de groupe GUK-ID est alors calculé localement par les clients MCX récepteurs en réalisant une opération « OU exclusif » XOR entre l'identité de l'utilisateur du client MCX émetteur connue (« User salt ») et l'identifiant de clé maître de groupe GMK-ID. De la même façon, l'identifiant de clé maître de groupe GMK-ID peut être calculé à partir de l'identifiant de clé utilisateur de groupe GUK-ID et de l'identité de l'utilisateur du client MCX émetteur connue (« User salt »). Par contre, l'identité de l'utilisateur du client MCX émetteur ne peut être obtenue à partir de l'identifiant de clé maître de groupe GMK-ID et de l'identifiant de clé utilisateur de groupe GUK-ID, ce pour garder une certaine confidentialité.

L'identité de l'utilisateur du client MCX émetteur peut être obtenue car elle est comprise dans les messages de contrôle de prise de parole en service voix MCPTT, messages appelés « Floor Control ». En service vidéo MCVideo, cette information est obtenue car elle est comprise dans les messages de contrôle de transmission, messages appelés « transmission control ». En service données MCData, il n'existe pas de diversité des points d'extrémité dans les spécifications 3GPP. En MCData, il est toutefois possible de récupérer l'identité de l'utilisateur du client MCX émetteur dans la charge utile (« payload » en anglais) des messages SIP et/ou HTTP. SIP est un protocole d'initiation de session (« Session Initiation Protocol » en anglais) connu et HTTP (pour « HyperText Transfer Protocol » en anglais) est un protocole de communication connu. En MCData, ce « payload » est chiffré de bout en bout mais sans diversité d'extrémité.

Dans le standard 3GPP MCS, l'identité d'utilisateur du client MCX est transmise dans toutes les demandes d'établissement d'appel (« call request » en anglais) et dans toutes les demandes de droit de parole (« floor request » et « transmission request »).

Cela pose un problème de sécurité, notamment lorsque le réseau 3GPP MCS s'étend sur plusieurs domaines de sécurité, car il est alors possible pour un client MCX récepteur d'identifier l'utilisateur du client MCX émetteur via son identifiant de clé utilisateur de groupe GUK-ID, cet identifiant étant utilisé dans le standard pour chiffrer le contenu envoyé avec diversité d'extrémité. Par « identifier » on entend la capacité pour un client récepteur de suivre l'utilisateur du client émetteur, c'est-à-dire, lorsqu'il prend plusieurs fois la parole ou communique plusieurs fois, de relier toutes ses prises de parole et communications au même client émetteur. Ce principe s'appelle « linkability » en anglais et permet à un client récepteur d'obtenir des informations clé sur le réseau 3GPP MCS et les utilisateurs qui le composent. Il est également possible, si le client récepteur connaît une liste d'identité de client émetteur potentiel, de savoir si la transmission provient de l'un de ces utilisateurs, en testant les différentes identités connues.

Il existe donc un besoin de pouvoir s'assurer, dans un réseau 3GPP MCS, qu'un client MCX récepteur ne puisse identifier un client MCX émetteur via son identifiant de clé utilisateur de groupe GUK-ID tout en étant capable de déchiffrer le contenu envoyé chiffré avec son identifiant de clé utilisateur de groupe GUK-ID.

### RESUME DE L'INVENTION

L'invention offre une solution aux problèmes évoqués précédemment, en permettant à un client émetteur, dans un réseau 3GPP MCS, de changer d'identité utilisateur de sorte qu'un client récepteur puisse déchiffrer le contenu émis sans pouvoir relier plusieurs communications du client émetteur audit client émetteur.

Un aspect de l'invention concerne un procédé mis en oeuvre par une entité cliente émettrice comprise dans un réseau selon le standard 3GPP MCS « 3rd Generation Partnership Program Mission Critical Services », l'entité cliente émettrice étant configurée pour émettre une pluralité de contenus destinés à au moins une entité cliente réceptrice comprise dans le réseau, l'entité cliente émettrice et l'entité cliente réceptrice étant affiliées à un même groupe de communication, le procédé comprenant au moins une étape de génération, par l'entité cliente émettrice, d'un identifiant de clé utilisateur de groupe GUK-ID, l'identifiant de clé utilisateur de groupe GUK-ID étant spécifique au groupe de communication et étant utilisé pour chiffrer le contenu, l'étape de génération étant répétée à chaque fois qu'un évènement prédéterminé a lieu.

Grâce à l'invention, on s'assure que l'entité réceptrice d'un contenu émis et chiffré par une entité émettrice est capable de déchiffrer le contenu, sans pouvoir lier la communication comprenant le contenu à d'autres communications de la même entité émettrice. Pour cela, l'invention comprend une génération aléatoire d'un identifiant de clé utilisateur de groupe GUK-ID de l'entité émettrice. Ainsi, l'entité émettrice ne peut pas être « tracée », c'est-à-dire ne peut être liée à ses différentes communications de sorte d'identifier qu'elle est un unique émetteur, mais le standard 3GPP MCS reste respecté, en ce que le chiffrement du contenu est réalisé, avec diversité d'extrémité, avec l'identifiant de clé utilisateur de groupe GUK-ID de l'entité émettrice.

Outre les caractéristiques qui viennent d'être évoquées dans les paragraphes précédents, le procédé selon un aspect de l'invention peut présenter une ou plusieurs caractéristiques complémentaires parmi les suivantes, considérées individuellement ou selon toutes les combinaisons techniquement possibles :
- le procédé comprend en outre les étapes de :
   - Chiffrement du contenu à émettre, le contenu étant chiffré par l'entité cliente émettrice, le chiffrement du contenu étant basé sur une clé maitre selon le protocole SRTP (Secure Real Time Protocol), la clé maitre comprenant un identifiant de clé maitre de groupe (GMK-ID) et l'identifiant de clé utilisateur de groupe (GUK-ID) généré.
   - Emission d'au moins une trame à destination de l'entité réceptrice, selon le protocole SRTP, la au moins une trame comprenant le contenu chiffré.
- une pluralité de trames est émise, chaque trame de la pluralité de trames comprenant une partie du contenu chiffré, la clé maitre étant comprise en en-tête d'une première trame de la pluralité de trames.
- l'évènement prédéterminé est le début et/ou la fin d'un intervalle de temps prédéterminé, l'identifiant de clé utilisateur de groupe (GUK-ID) étant utilisé pour chiffrer chaque contenu d'une pluralité de contenus émis pendant l'intervalle de temps prédéterminé.
- l'évènement prédéterminé est l'émission d'un nouveau contenu.
- l'identifiant de clé utilisateur de groupe (GUK-ID) est généré aléatoirement.
- le groupe de communication est un groupe MCPTT et le contenu est une communication voix ou un groupe MCVideo et le contenu est une vidéo ou un groupe MCData et le contenu est un ensemble de données textuelles ou un fichier.

Un autre aspect de l'invention concerne un réseau de communication selon le standard 3GPP MCS « 3rd Generation Partnership Program Mission-Critical System », le réseau de communication comprenant au moins :
- une entité cliente émettrice configurée pour mettre en oeuvre le procédé selon l'invention,
- une entité cliente réceptrice configurée pour recevoir le contenu chiffré et la clé maitre émis par l'entité émettrice.

Encore un autre aspect de l'invention porte sur un produit programme d'ordinateur comprenant des instructions qui conduisent l'entité cliente émettrice du réseau selon l'invention à exécuter les étapes du procédé selon l'invention.

Encore un autre aspect de l'invention porte sur un support lisible par ordinateur, sur lequel est enregistré le programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau comprenant des entités configurées pour mettre en oeuvre le procédé selon l'invention,
- La figure 2 montre un exemple de mise en oeuvre du procédé selon l'invention,
- La figure 3 montre une représentation schématique d'un procédé selon l'invention,
- Les figures 4A et 4B montrent une représentation schématique d'un premier mode de réalisation du procédé selon l'invention,
- La figure 4C montre une représentation schématique d'un deuxième mode de réalisation du procédé selon l'invention.

### DESCRIPTION DETAILLEE

Sauf précision contraire, un même élément apparaissant sur des figures différentes présente une référence unique.

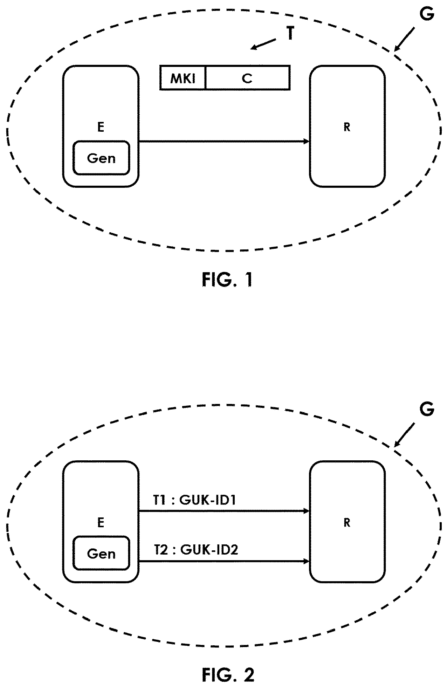

La Figure 1 montre une représentation schématique d'un réseau comprenant des entités configurées pour mettre en oeuvre le procédé selon l'invention.

En particulier, le réseau représenté à la Figure 1 comprend une entité émettrice E configurée pour mettre en oeuvre le procédé selon l'invention, et une entité réceptrice R.

Le réseau représenté à la Figure 1 est un réseau selon le standard 3GPP MCS, c'est-à-dire qu'il est implémenté en suivant les spécifications définies par le standard 3GPP MCS.

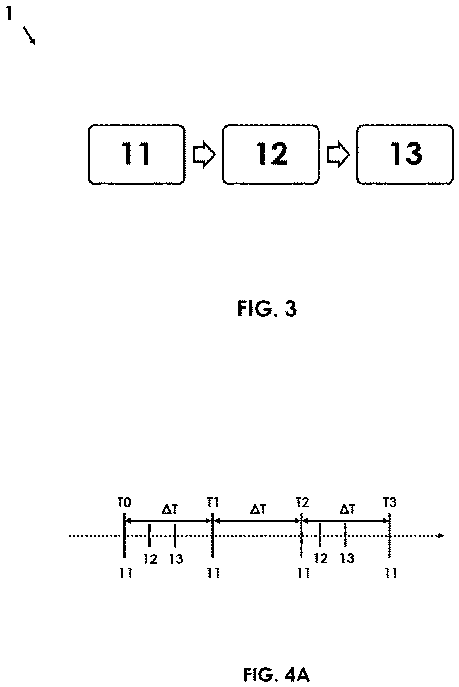

La Figure 3 montre une représentation schématique du procédé selon l'invention. Le procédé représenté à la Figure 3 est un procédé de gestion d'identité selon l'invention au sein du réseau de la Figure 1.

Le réseau de la Figure 1 comprend un groupe de communication G. L'entité émettrice E est affiliée au groupe de communication G. L'entité réceptrice R est aussi affiliée au même groupe de communication G. Le groupe G est un groupe de communication MCPTT, MCVideo ou MCData tels que définis dans l'état de l'art.

L'entité émettrice E et l'entité réceptrice R peuvent être des entités client ou serveur, participant ou non-participant, ou toute autre entité définie par le standard 3GPP MCS. L'entité émettrice E et l'entité réceptrice R sont des dispositifs comprenant au moins un processeur et une mémoire, la mémoire comprenant des instructions qui, lorsqu'elles sont exécutées par le processeur, conduisent le processeur à mettre en oeuvre une action attribuée à l'entité. Par exemple, les entités peuvent être des dispositifs utilisateur tels que des téléphones mobiles, des tablettes, des ordinateurs, ou tout autre dispositif utilisable par un utilisateur, ou peuvent encore être des ordinateurs ou dispositifs ayant le rôle de serveur au sens du standard 3GPP MCS.

Le procédé 1 selon l'invention représenté à la Figure 3 permet à l'entité émettrice E de modifier dynamiquement son identité, identité qui sera utilisée pour chiffrer au moins un contenu à destination de l'entité réceptrice R. Pour cela, l'entité émettrice E comprend au moins un module Gen de génération d'identité, permettant de mettre en oeuvre l'étape de génération 11 du procédé 1 selon l'invention représenté à la Figure 3. Ce module est préférentiellement un module logiciel, mis en oeuvre par le processeur de l'entité émettrice.

L'invention utilise les identifiants de clé suivants :
- Identifiant de clé utilisateur de groupe GUK-ID : cet identifiant est un identifiant de clé propre à un utilisateur de l'entité émettrice E et propre au groupe de communication G. Ainsi, cette clé peut être vue comme une « clé de session » dans le protocole SRTP, tel que défini dans la RFC 3711. Un identifiant de cette clé, qui n'a pas à rester secret, permet de retrouver cette clé, qui doit rester secrète. Cette clé utilisateur est utilisée pour chiffrer un contenu dans le standard 3GPP MCS en présence de diversité d'extrémité.
- Identifiant de clé maitre de groupe GMK-ID : cet identifiant est un identifiant de clé maitre de groupe propre au groupe de communication G. En présence de diversité d'extrémité, cette clé maitre de groupe GMK est utilisée en combinaison avec la clé utilisateur de groupe GUK pour chiffrer un contenu comme défini au point 7.4.2 de la spécification technique TS 33.180.
- Identifiant de clé maitre MKI : cet identifiant est un identifiant de clé maître comprenant, en présence de diversité d'extrémité, l'identifiant de clé utilisateur de groupe GUK-ID, et l'identifiant de clé maitre de groupe GMK-ID.

Le procédé 1 selon l'invention représenté à la Figure 3 comprend au moins une étape 11 de génération d'un identifiant de clé utilisateur de groupe GUK-ID. Cet identifiant de clé utilisateur de groupe GUK-ID est généré, selon l'invention, à chaque fois qu'un évènement prédéterminé intervient. Ainsi, il n'est pas possible pour une entité réceptrice R de lier les différentes communications émises par l'entité émettrice E à la même entité émettrice E, puisque son identifiant de clé utilisateur de groupe GUK-ID, normalement fixe, est régulièrement modifié.

Par exemple, comme représente à la Figure 2, une trame T1 sera envoyée comprenant un contenu C1 chiffré avec un premier identifiant de clé utilisateur de groupe GUK-ID1 puis une trame T2 sera envoyée comprenant un contenu C2 chiffré avec un autre identifiant de clé utilisateur de groupe GUK-ID2. Les deux trames T1 et T2 ne pourront être reliées, par l'entité réceptrice R, à l'entité émettrice E puisque les identifiants de clé utilisateur de groupe GUK-ID1 et GUK-ID2 ayant servi à chiffrer les contenus respectivement C1 et C2 et transmis respectivement dans les trames T1 et T2 sont différents et non liés à l'identité de l'entité émettrice E.

De manière préférentielle, l'identifiant de clé utilisateur de groupe GUK-ID généré à l'étape 11 est généré aléatoirement. L'identifiant de clé utilisateur de groupe GUK-ID peut aussi être généré selon un ensemble de données prédéterminé, l'important étant que ces données ne soient pas liées à l'entité émettrice E pour ne pas pouvoir l'identifier comme émettrice du contenu chiffré avec l'identifiant de clé utilisateur de groupe GUK-ID.

Le procédé selon l'invention comprend aussi une étape 12 de chiffrement du contenu C compris dans la trame T envoyée à l'entité réceptrice R. Le chiffrement 12 du contenu C est réalisé par l'entité émettrice E. Le chiffrement se base sur l'identifiant de clé utilisateur de groupe GUK-ID généré en dernier, c'est-à-dire lors la dernière mise en oeuvre de l'étape de génération 11, et sur l'identifiant de clé maitre de groupe GMK-ID. Le chiffrement 12 est réalisé en utilisant une clé maitre selon le protocole SRTP (Secure Real Time Protocol) à la RFC3711 et selon la spécification technique TS 33.180 point 7.5.1, la clé maitre étant identifiée par son identifiant de clé maitre MKI.

Le procédé 1 selon l'invention comprend ensuite une étape 13 d'émission d'au moins une trame T selon le protocole SRTP, par l'entité émettrice E vers l'entité réceptrice R, la trame T comprenant le contenu C chiffré à l'étape 12 avec l'identifiant de clé utilisateur de groupe GUK-ID généré à l'étape 11. La trame T comprend aussi en en-tête l'identifiant de clé maitre MKI comprenant l'identifiant de clé utilisateur de groupe GUK-ID généré à l'étape 11 et l'identifiant de clé maitre de groupe GMK-ID. La trame T est alors transmise à l'entité réceptrice R, qui utilise les informations comprises dans l'identifiant de clé maitre MKI et les informations qu'elle a à sa disposition grâce à la topologie et au contexte du réseau pour déchiffrer le contenu C.

Dans une variante, le contenu C chiffré est découpé en plusieurs parties et réparti et envoyé en une pluralité de trames. Dans cette variante, l'identifiant de clé maître MKI peut n'être compris que dans l'en-tête de la première trame de la pluralité de trames. Cela permet d'économiser de la bande passante, tout en permettant de déchiffrer le contenu.

L'étape 11 est répétée à chaque fois qu'un évènement prédéterminé a lieu. Les étapes 12 et 13 sont répétées quand un contenu C doit être émis. L'invention n'a de sens qu'en cas d'émission d'une pluralité de contenus C. En effet, dans le cas de l'émission d'un seul contenu C, le problème de sécurité n'existe pas.

Selon l'invention, l'évènement menant à une nouvelle génération 11 peut être :
- le début ou la fin d'un intervalle de temps prédéterminé, ou
- une prise de parole ou le début d'une communication.

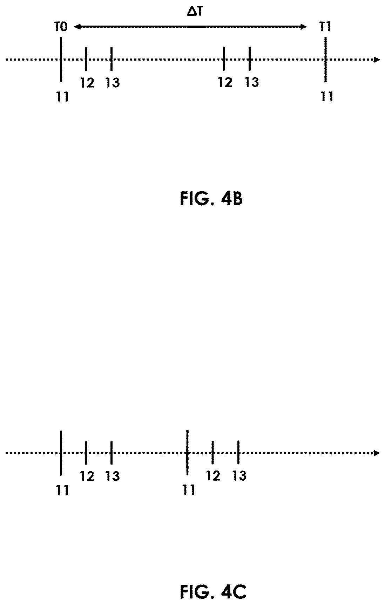

Le premier cas est représenté aux Figures 4A et 4B et le deuxième cas est représenté à la Figure 4C.

Les Figures 4A et 4B représentent un premier mode de réalisation, c'est-à-dire le cas où l'évènement prédéterminé est fonction d'un intervalle de temps prédéterminé. Cet intervalle de temps a par exemple une durée Δt, la durée de l'intervalle étant prédéterminée, c'est-à-dire fixée à l'avance par configuration, par exemple grâce à un paramètre compris dans la mémoire de l'entité émettrice E ou récupérée d'un autre dispositif distant. L'intervalle prédéterminé a une durée exprimée par exemple en secondes, en minutes, en heures ou en jours. Préférentiellement, l'intervalle prédéterminé est choisi de façon à limiter les possibilité d'identifier une même entité émettrice E, donc de façon à ne pas couvrir, avec le même identifiant de clé utilisateur de groupe GUK-ID, plus de quelques émissions de contenu, par exemple pas plus de deux émissions de contenu C, ou pas plus de dix émissions de contenu, ou pas plus d'un pourcentage du nombre moyen d'émissions de contenu sur une période donnée, par exemple 10%, de façon à changer dix fois d'identifiant de clé utilisateur de groupe GUK-ID pour l'envoi de la totalité des contenus C sur ladite période donnée.

Lorsque, comme représenté aux Figures 4A et 4B, l'évènement est fonction d'un intervalle de temps, l'étape 11 de génération d'identifiant de clé utilisateur de groupe GUK-ID peut être réalisée pour chaque nouvel intervalle, par exemple au début ou à la fin de chaque intervalle. L'étape 11 de génération est alors réalisée périodiquement.

A la Figure 4A, l'étape 11 de génération d'identifiant de clé utilisateur de groupe GUK-ID est réalisée quatre fois aux instants T0 à T3 tandis que les étapes de chiffrement 12 du contenu avec l'identifiant de clé utilisateur de groupe GUK-ID et d'émission 13 de la trame comprenant la contenu chiffré et l'identifiant de clé maitre MKI comprenant l'identifiant de clé utilisateur de groupe GUK-ID ne sont réalisées que deux fois.

A la Figure 4B, l'étape 11 de génération d'identifiant de clé utilisateur de groupe GUK-ID est réalisée deux fois aux instants T0 et T1 tandis que les étapes de chiffrement 12 du contenu avec l'identifiant de clé utilisateur de groupe GUK-ID et d'émission 13 de la trame comprenant la contenu chiffré et l'identifiant de clé maitre MKI comprenant l'identifiant de clé utilisateur de groupe GUK-ID sont réalisées deux fois, avec le même identifiant de clé utilisateur de groupe GUK-ID. Ces deux communications peuvent être reliées à la même entité émettrice E, sans avoir toutefois connaissance de son identité. L'identifiant de clé utilisateur de groupe GUK-ID agit alors comme un « pseudonyme ». Un nouvel identifiant de clé utilisateur de groupe GUK-ID est alors généré à l'étape 11 réalisée à l'instant T1, et les communications suivantes (non représentées) ne seront pas reliables aux deux premières communications.

Dans ce premier mode de réalisation, la génération 11 de l'identifiant de clé utilisateur de groupe GUK-ID n'est pas directement liée à l'émission de contenu depuis l'entité émettrice E vers l'entité réceptrice R, puisqu'elle est réalisée en fonction d'une condition temporelle.

Dans une variante au premier mode de réalisation, la durée de l'intervalle prédéterminé peut être variable, c'est-à-dire que Δt n'est pas fixe.

La Figure 4C représente un deuxième mode de réalisation dans lequel l'évènement prédéterminé est fonction de l'initiation d'une communication. Dans ce deuxième mode de réalisation, la génération 11 de l'identifiant de clé utilisateur de groupe GUK-ID est réalisée à chaque prise de parole en MCPTT, à chaque émission de contenu vidéo en MCVideo, ou à chaque émisison de données textuelles ou de fichier en MCData. Ainsi, dans ce deuxième mode de réalisation, l'entité réceptrice R ne peut grouper aucune communication avec d'autres et ne peut pas les relier avec l'entité émettrice E. L'entité réceptrice R peut quand même déchiffrer le contenu puisqu'elle reçoit, dans l'identifiant de clé maitre MKI, l'identifiant de clé utilisateur de groupe GUK-ID utilisé pour chiffrer le contenu avec l'identifiant de clé maitre de groupe GMK-ID.

## Revendications

1. Procédé (1) mis en oeuvre par une entité cliente émettrice (E) comprise dans un réseau selon le standard 3GPP MCS « 3rd Generation Partnership Program Mission Critical Services », l'entité cliente émettrice (E) étant configurée pour émettre une pluralité de contenus (C) destinés à au moins une entité cliente réceptrice (R) comprise dans le réseau, l'entité cliente émettrice (E) et l'entité cliente réceptrice (R) étant affiliées à un même groupe de communication (G), le procédé (1) comprenant au moins une étape de génération (11), par l'entité cliente émettrice (E), d'un identifiant de clé utilisateur de groupe (GUK-ID), l'identifiant de clé utilisateur de groupe (GUK-ID) étant spécifique au groupe de communication (G) et étant utilisé pour chiffrer le contenu (C), l'étape de génération (11) étant répétée à chaque fois qu'un évènement prédéterminé a lieu.

2. Procédé (1) selon la revendication précédente comprenant en outre les étapes de :
- Chiffrement (12) du contenu (C) à émettre, le contenu (C) étant chiffré par l'entité cliente émettrice (E), le chiffrement du contenu (C) étant basé sur une clé maitre selon le protocole SRTP (Secure Real Time Protocol), la clé maitre comprenant un identifiant de clé maitre de groupe (GMK-ID) et l'identifiant de clé utilisateur de groupe (GUK-ID) généré,
- Emission (13) d'au moins une trame (T) à destination de l'entité réceptrice (R), selon le protocole SRTP, la au moins une trame (T) comprenant le contenu (C) chiffré.

3. Procédé (1) selon la revendication précédente selon lequel une pluralité de trames (T) est émise, chaque trame (T) de la pluralité de trames comprenant une partie du contenu (C) chiffré, la clé maitre étant comprise en en-tête d'une première trame (T) de la pluralité de trames.

4. Procédé (1) selon l'une quelconque des revendications précédentes selon lequel l'évènement prédéterminé est le début et/ou la fin d'un intervalle de temps prédéterminé, l'identifiant de clé utilisateur de groupe (GUK-ID) étant utilisé pour chiffrer chaque contenu (C) d'une pluralité de contenus émis pendant l'intervalle de temps prédéterminé.

5. Procédé (1) selon l'une quelconque des revendications 1 à 3 selon lequel l'évènement prédéterminé est l'émission d'un nouveau contenu.

6. Procédé (1) selon l'une quelconque des revendications précédentes selon lequel l'identifiant de clé utilisateur de groupe (GUK-ID) est généré aléatoirement.

7. Procédé (1) selon l'une quelconque des revendications précédentes selon lequel le groupe de communication (G) est
- un groupe MCPTT et le contenu (C) est une communication voix ou
- un groupe MCVideo et le contenu (C) est une vidéo ou
- un groupe MCData et le contenu (C) est un ensemble de données textuelles ou un fichier.

8. Réseau de communication selon le standard 3GPP MCS « 3rd Generation Partnership Program Mission-Critical System », le réseau de communication comprenant au moins :
- une entité cliente émettrice (E) configurée pour mettre en oeuvre le procédé (1) selon l'une quelconque des revendications 1 à 7,
- une entité cliente réceptrice (R) configurée pour recevoir le contenu (C) chiffré et la clé maitre émis par l'entité émettrice (E).

9. Produit programme d'ordinateur comprenant des instructions qui conduisent l'entité cliente émettrice du réseau selon la revendication 8 à exécuter les étapes du procédé selon l'une des revendication 1 à 7.

10. Support lisible par ordinateur, sur lequel est enregistré le programme d'ordinateur selon la revendication 9.
